# EUROPEAN PATENT SPECIFICATION

(11) **EP 0 893 105 B1**
(45) Date of publication and mention of the grant of the patent: **15.01.2003**
(21) Application number: 97912229.8
(22) Date of filing: 19.11.1997
(51) Int. Cl.: A61C 8/00, A61C 13/275

(54) **DENTAL IMPLANT**
ZAHNIMPLANTAT
IMPLANT DENTAIRE

(30) Priority: 20.11.1996 ES 9602451
(43) Date of publication of application: 27.01.1999
(73) Proprietor: Arruga Artal, Carlos, 50008 Zaragoza (ES); Arruga Artal, Alberto, 50008 Zaragoza (ES)
(72) Inventor: ARRUGA ARTAL, Alberto, E-50008 Zaragoza (ES)
(74) Representative: Ungria Lopez, Javier
(86) International application number: ES9700282
(87) International publication number: WO98022038

(56) References cited:
- EP-A- 0 393 324
- EP-A- 0 669 112
- WO-A-96/17560
- ES-A- 2 016 754
- ES-T- 2 041 403
- FR-A- 2 387 640

## Description

### OBJECT OF THE INVENTION

The following invention relates to a dental implant, being similar to those comprised of an implant body which threads to the maxilla and the corresponding anchorage and securing bodies of the dental prosthesis, in such a way that the prosthesis receiving body is fixed to a shaft, seating on the inner part of the implant osteointegrated into a joint, at the same time as a pair of diametral projections of the same shaft are fitted in respective recesses of the extender bush, which is joined by threading to the said implant.

Also, on the junction of the extender bush and the implant, a flat seal is disposed; on the joint of the said extender bush and the prosthesis receiving body, an o-ring is also disposed provided with a perimetral wing.

By means of the dental implant which is described on the present specification, the fixed placement of one single dental piece, several or a complete false denture is achieved by using the number of implants suitable to this effect.

On the other hand, the implant is easily detachable, so as to allow its check-up, and if at all, to change any pieces as may be the seals that it incorporates, since even though they can be kept in good state, in time, they lose their resiliency and it is convenient to change them.

With the described dental implant, it is achieved that the false dental pieces have the same movability as the natural dental pieces.

Also, the implant is complemented with a body of generally hollow truncated-cone shape, which presents on its upper side surface one or two threadings in radial position, allowing the union of some small beams for the joining of several bodies to each other, in such a way that they are used when implants are placed to the patient for placing a false denture already used by the patient, in such a way that, once the implants are ferruled between them by means of the described bodies, its own denture is adapted so that by means of some clamps it may be joined to the hollow truncated-cone shaped body union beams fixed to the body, which usually receives the prosthesis, the patient being able to use its own denture from the same moment in which the implants were placed, avoiding the risk of the implants being moved since they are all joined to each other.

### APPLICATION FIELD

The dental implant which is presented can be applied in odontology, being allowed to be used for the implant of one single or several dental pieces, or by using several implants, the whole of the false denture may be fixed, enabling its liberation so as to make it easy to ascertain the state in which are all the implants.

### BACKGROUND OF THE INVENTION

With the years, odontology has experienced a great advance, trying to prevent, as much as possible, the extractions of the dental pieces, in such a way that when the extraction is necessary the same is replaced by a fixed prosthesis and, on the extreme case of total absence of dental pieces, for a fixed denture, related to various points of the maxilla.

Thus, with the absence of dental pieces, the placement of provisional or permanent bridge-works, consisting of elements of one or more artificial tooth secured to a holder, which is gripped on the adjacent natural teeth, has been provided.

With the absence of an important amount of dental pieces, their substitution is performed by means of a partial false denture, while when the absence of dental pieces is total, complete false dentures are used.

In this way, the inconveniences appearing with the dentures which are not fixed are considerable so that, from a long time, the tendency is in favor of placing fixed prosthesis.

In this way, the own holder of the present invention is also way the holder of European Patent N° 126.624 which claims priority from Spanish Utility Models 272.292 and 279.140, in which both fixed dental implants are claimed, one of them consisting of the assembly of a pair of bodies, one of them being provided, on one of its ends, with an outer threading so as to secure it to the maxilla, while referring to the other end, it has a central axial orifice through which an end of the second body which has the dental prosthesis is introduced, being fixed to each other by pressure.

The central axial orifice of the body fixed to the maxilla is performed according to two diameters, the outer one being bigger and having, on the proximity of the section of a larger diameter, an annular groove and this threading body being supplied, on the same way, on its free base, with an annular groove in which an o-ring is placed.

Also, the dental prosthesis body has its end fitted on it, having two annular shoulders, while its cylindrical emerging end has an staggered undercutting according to the inner diameters of the threaded body, also existing an annular shoulder placed on the end which has an smaller diameter and proximal to the staggering where the o-ring is placed, partially introduced on the inner annular groove corresponding to the threaded body.

Also, the second implant is formed by two independent pieces, one of which is fixed to the maxilla and the other one, which bears the prosthesis, is anchored to it by means of pressure, the body threaded to the maxilla presenting a central axial orifice according to two diameters, the most outer section of a smaller diameter comprising a threading and the largest diameter section on the vicinity of the beginning of the smaller diameter having an annular entry, while the second body presents a generally cylindrical shape, having in relation with the placement of the prosthesis an annular undercutting and a second undercutting, also annular on the proximity of its free base.

The union of both bodies will take place by disposing on the pair of undercuttings of the cylindrical body which bears the prosthesis, respective o-rings which upon the assembling by pressure thereof on the body threaded to the maxilla will be related to the annular undercutting performed on the section of bigger diameter proximal to the section of smaller threaded diameter and in relation to their top base.

In this way, the system of both of them is based on the decomposition of forces that the pair of o-rings carry out giving to the body which bears the prosthesis a movement similar to the one of a similar tooth.

On the handling procedure of the said European Patent, British Patent 2.063.680, European Patent 0000549 and US Patents 4.290.255 and 1.397.067, the two last ones simply belonging to the technical field are considered as background.

Relating to British Patent 2.063.680, it can be pointed out that an implant for mandible is claimed thereon, consisting of the union of three elements, which are closely related to each other, while one of them, the most outer one, is bonded to the maxilla, so that the implant consists of one single piece without any system of decomposition of forces.

On the other hand, European Patent 0000549 claims an endoprosthesis consisting of a cylindrical body having in its inner part axial slots and on its outer surface it has a thread, the top end of which ending with a bevel form.

The said body is closely joined by a solid body having on its outer surface complementary axial slots with the inner slots of the outer body, being thus defined a bonding body and acting as only one body, so that no system of force decomposition is presented.

Document EP-A-0669112 discloses a dental implant with seal. Said implant comprises a lower peg for anchoring in the jaw and an upper tooth base connected to it by a screw. Clamping pressure is effected between an annular surface on the upper tooth base and an opposing end face on the peg. A compressible sealing ring is located in an annular groove in the upper tooth base close to the component axis and a ringshaped lip extending into the annular groove ensures a designed compression of the sealing ring. The annular surface is inclined to the opposing end face, the angle facing the component axis.

Another document, ES-A-2016754, discloses a process to obtain bone implant prosthesis, comprising an insert connected via its external end to an implant column, and a shock absorber, connected to the insert, which forms a foundation for a superstructure forming the active part of a tooth, these elements being connected by means of an axle bolt. In accordance with this invention, the shock absorber is supermoulded onto the insert, forming a single piece with the elastic properties of a tooth, and eliminating the risk of fissures forming which would allow for penetration of organic fluids. Particularly applicable to dental prosthesis.

Finally, the document ES-T-2041403 discloses a bone implant with a head for its fixing and an implant shaft made of metal which is ferruled with a base body which presents devices for fixing a false fixed tooth. Said false fixed tooth can be conditionally dismantled. It is equipped with a separating ferrule provided with an edge for its centering which can be installed in the open end of the base body. It is also equipped with a side which can be adapted to the upper edge of the base body, and with an intermediate element made of an elastic material such as plastic, which surrounds concentrically the implant shaft.

### DESCRIPTION OF THE INVENTION

In the present specification a dental implant of the type of those which consist of an implant body of a generally cylindrical shape is described, with a narrowing related to the base of implantation and provided with an outer threading so as to be fixed to the maxilla, as well as with a prosthesis receiving body which receives a prosthesis which can be fixed by the corresponding screws to the respective implants, the dental implant being conformed by a shaft fixed to the implant body to which the prosthesis by threading is joined and an extender bush which is secured to the implant body provided with means for securing the shaft and means for ferruling the implants adapted after they have been implanted in order to enable to place, suitably, the own denture used by the patient.

The means of the extender bush for the securing of the shaft, are defined by a pair of recesses in diametral positions with respect to their inner base, with respective diametral projections of the shaft being placed with them, avoiding their accidental rotation, as well as enabling the removing of the necessary pieces which form the implant.

The means for ferruling the implants immediately after they have been implanted, are defined by respective pieces generally with a hollow truncated-cone shape, which are positioned upon the prosthesis receiving bodies which conventionally must receive the prosthesis, being secured by means of respective screws.

With the purpose of materializing the ferrulization of the newly inserted implants, the pieces arranged upon the prosthesis receiving bodies which conventionally receive the prosthesis, have one or several blind orifices threaded in radial position, in relation to their top base, to secure by threading the respective studs which bond them to each other, so as to secure by clipping the prosthesis adapted which was already used by the patient.

The great advantage of this embodiment, i.e., that the patient already uses a dental prosthesis, is that he is able to go home with his prosthesis from the moment in which the implants have been placed, with the further advantage that they are perfectly fixed, avoiding, this way, any possible movement thereof.

With the purpose of complementing the description which will hereinafter take place, and so as to help for a better comprehension of its characteristics, there is a set of designs accompanying the present specification, in which figures, in an illustrative and non limitative way, the most significant details of the invention, described on the present specification, are represented.

### BRIEF DESCRIPTION OF THE DRAWINGS

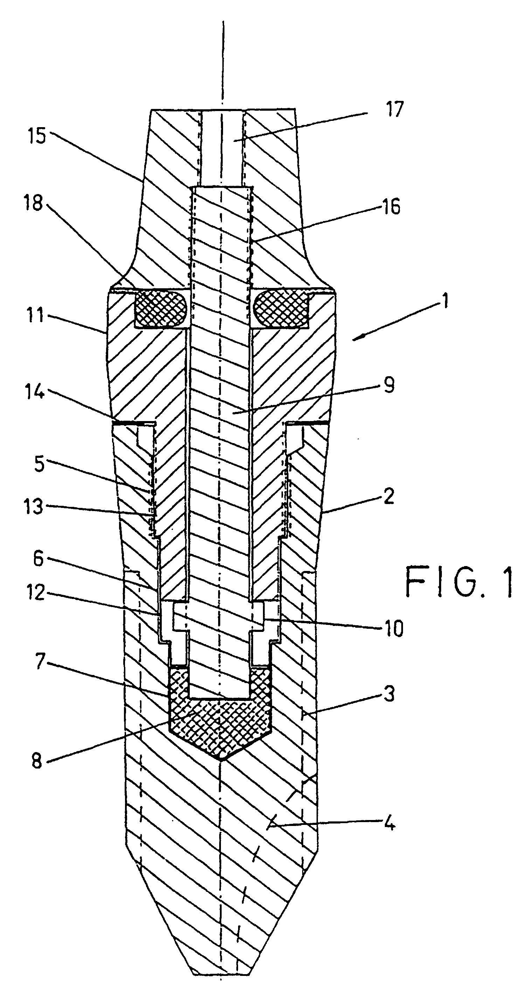

Figure 1 shows a cross-section view of the dental implant, in which the shaping pieces thereof can be seen with the extender bush sectioned in relation to the pair of recesses of their inner base in which the respective projections of the shaft are housed, so as to avoid the free rotation thereof, as well as to enable their simple removal.

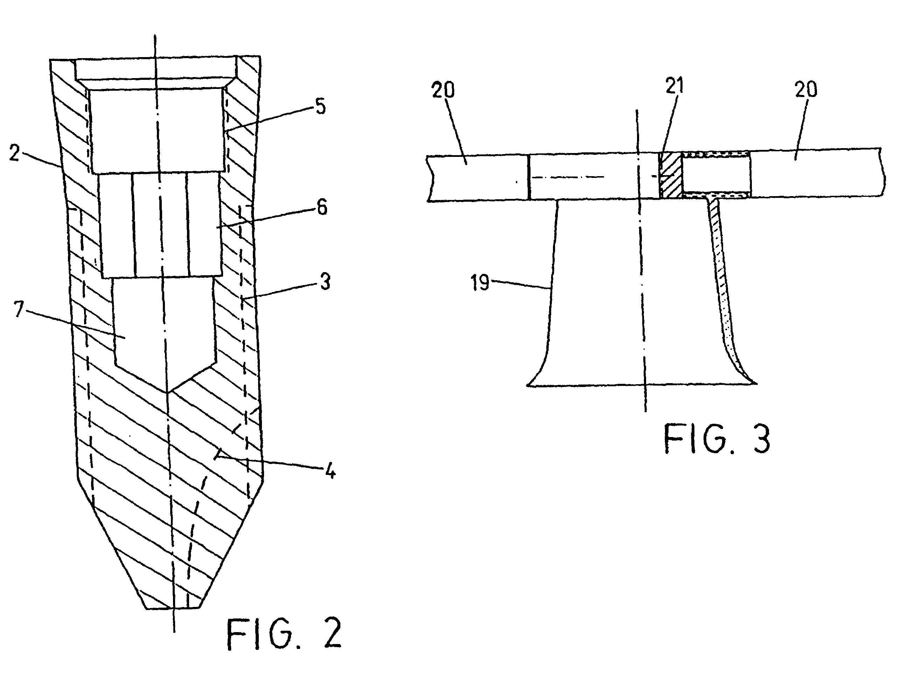

Figure 2 shows a cross-section view of the implant body in the strict sense, in which the sections defined thereof can be seen, like the first threaded section, the second section of hexagonal cross-section which makes it easier to be handled by means of the corresponding tool and the most inner section of housing of the dampering and bearing seal of the shaft.
Figure 3 shows a cross-section view of the body which acts as a cap, disposing it upon the implant body which conventionally receives the prosthesis, and which will be of application on the cases in which the object is to ferrule the newly placed implants so as to put them together, for the corresponding radial studs upon which the previously adapted denture will be placed, already used by the person to whom the secured implants were placed.

### DESCRIPTION OF A PREFERRED EMBODIMENT

In view of the commented figures and in accordance with the adopted numeration, we can see how the dental implant 1 is formed by the implant body 2 which is implanted on the maxilla for which purpose it presents an outer threading 3, as well as the undercutting 4 that once the implant is perfectly consolidated it will avoid the rotation thereof, since when the osteointegration takes place, the part of the undercutting 4 is filled in.

On the other hand, the implant body 2 presents a central axial cavity, which defines a first threaded section 5, a second section 6 of hexagonal section which will enable its handling and a more inner third section 7 in which the dampering and centering seal 8 of the shaft 9 is positioned.

The extender bush 11 is secured by threading to the implant body 2 of the implant, as it is provided with a threaded section 13 in relation to the inner threaded section 5 of the implant body 2, while in relation to its inner base, comprises a pair of diametral recesses 12, to which are related the respective projections 10 of the shaft 9 materializing the securing thereof so as to avoid a possible rotation, as well as to allow its removal for possible revisions as well as for changes of some worn away or damaged elements.

The extender bush 11 is detached to the implant body 2 of the implant, with the insertion of the flat seal 14.

Before placing the extender bush 11, the shaft 9 passing through its central hole has been disposed, and the diametral projections 10 thereof have been disposed in relation to the inner recesses 12 of the extender bush 11.

Finally, the prosthesis receiving body 15 is disposed, threading it against the top threaded part of the shaft 9, for which purpose said prosthesis receiving body presents centrally and axially two sections 16 and 17 of a different diameter, the section threading upon shaft 9 having a larger diameter while upon the most extreme threaded section 17, the screw which will secure the prosthesis will be threaded.

In this way, between the extender bush 11 and the prosthesis receiving body 15, there is an o-ring 18 having a perimetral wing upon which both bodies are externally detached.

In this way, all the bodies forming the dental implant 1, present a simple mechanization, which reduces its economic cost, while it enables the easy removal thereof to perform revisions, as well as to be able to carry out the changes of the seals, since even if they do not suffer any breakage their change is convenient as a consequence of the wear away that they suffer as time goes by reaching the point of losing some of their effectiveness.

On the other hand, the dental implant incorporates an accessory piece, which is useful for the cases in which, when the patient already uses a prosthesis, on the moment in which the implants are to be placed, it is disposed upon the described piece which usually receives the prosthesis, disposing between them corresponding beams which bond them to each other, so that, later on, once the prosthesis used by the patient is adapted, it would be mounted by means of a clippage upon the same beams.

Thus, the accessory piece 19 with the shape of a cap presents a generally hollow truncated-cone shape, which is disposed upon the prosthesis receiving body 15 and is joined to it by means of a screw threaded to the axial threaded orifices 21 and 17 of both pieces, at the same time in relation to its top base and in radial position it presents one or two threaded orifices in which beams 20 are secured.

In this way, once the implant or implants 1 are placed in the maxilla, upon prosthesis receiving bodies 15 the corresponding caps 19 are disposed by jointing them by means of a threaded screw into the orifices 21 and 17 of the respective bodies to be jointed, at the same time that caps 19 are jointed to each other by means of respective beams 20. Caps 19 will comprise one or two radially threaded orifices on the top, according to how they are positioned on the extremes or at the central part of the implants which are placed, being able to adapt, easily, the length of beams 20 when they are welded by means of a laser.

By acting as the described form, the patient which already had its own prosthesis and wants to place some fix implants, will be able to leave with the placed implants 1, as well as with his own prosthesis which has been adapted so as to be coupled upon beams 20, for which purpose it was only necessary to dispose at the prosthesis some clamps which will stay fixed to the beams by simply clippage, in such a way that the implants will be perfectly ferruled to each other, avoiding any movement thereof and also the patient is able to use its own prosthesis.

All of the described operations are very simple, so that the time of placement of the implants not only is not increased, but is reduced in relation to the conventional shape of placement of the implants, while the advantages which it presents are multiple as the patient is able to leave the clinic or the consulting room with his own prosthesis, while a new one is being made for him, for its later assembly upon the prosthesis receiving body 15.

## Claims

1. A dental implant comprising:
an implant body (2) having a generally cylindrical shape, an extreme narrowing (4) and an external threading for securing the implant body (2) to a maxilla,
a prosthesis receiving body (15) to which a prosthesis is fixed by a screw,
a shaft (9) having a first end portion and a second end portion, the first end portion being secured to the prosthesis receiving body (15),
an extender bush (11) which is secured within an axial aperture (5,6,7) of the implant body (2) having an outer base next to the prosthesis receiving body and an inner base placed in said axial hollow (5,6,7), the shaft (9) axially extending through a central opening in said extender bush (11),
securing means for securing the shaft (9) and the extender bush (11) with respect to each other, and
ferruling means for ferruling the implant after its implantation so as to enable positioning of a false denture of a patient,
**characterized in that**:
securing means comprises a pair of diametrically opposed recesses (12) in the inner base of the extender bush (11), for receiving respective diametrically opposed projections (10) on second end portion of the shaft (9) so as to prevent rotational movement of the shaft (9) in respect of the extender bush (11);
an O-ring (18) having a perimetral wing, located between said extender bush (11) and said prosthesis receiving body (15); and
a damper seal (8) located in a lowermost portion (7) of the axial aperture (5,6,7), whereby the end of said second end portion of the shaft abuts against said damper seal (8).

2. A dental implant according to claim 1, **characterized in that** the ferruling means for ferruling the implant after immediate insertion, is a generally hollow piece (19) having a truncated-cone shape, which can be positioned upon the prosthesis receiving body (15), and secured thereto by means of a screw.

3. A dental implant according to claim 2, **characterized in that** the piece (19) positioned upon the prosthesis receiving body (15), has at least one radial threading on its top part for securing respective beams (20) for bonding the implant to another implant.

4. A dental implant according to claim 1, **characterized in that** the first end portion of the shaft (9) can be screwed into the prosthesis receiving body (15).

5. A dental implant according to claim 1, **characterized in that** the extender bush (11) has an outer threaded section (13) adapted to be screwed in a first section (5) of the axial aperture with a matching threading.

6. A dental implant according to claim 1, **characterized in that** it comprises a flat annular seal (14) between the implant body (2) and the extender bush (11).

## Patentansprüche

1. Zahn-Implantat, das umfasst:
einen Implantat-Körper (2), der eine im Allgemeinen zylindrischen Form, eine starke Verdünnung (4) und ein Außengewinde zum Befestigen des Implantat-Körpers (2) an einem Oberkiefer aufweist,
einen Prothesenaufnahme-Körper (15), an dem eine Prothese mittels einer Schraube fixiert wird,
einen Schaft (9), der einen ersten Endabschnitt und einen zweiten Endabschnitt aufweist, wobei der erste Endabschnitt an dem Prothesenaufnahme-Körper (15) befestigt ist,
eine Verlängerungsbuchse (15), die in einer axialen Öffnung (5, 6, 7) des Implantat-Körpers (2) befestigt ist und eine äußere Basis nahe an dem Prothesenaufnahme-Körper sowie eine innere Basis aufweist, die in dem axialen Hohlraum (5, 6, 7) angeordnet ist, wobei sich der Schaft (9) axial durch eine Mittelöffnung in der Verlängerungsbuchse (11) hindurch erstreckt,
eine Befestigungseinrichtung zum Befestigen des Schafts (9) und der Verlängerungsbuchse (11) in Bezug zueinander, und
eine Festklemmeinrichtung zum Festklemmen des Implantats nach seiner Implantation, um so Positionieren eines künstlichen Gebisses eines Patienten zu ermöglichen,
**dadurch gekennzeichnet, dass**:
die Befestigungseinrichtung ein Paar einander diametral gegenüberliegender Aussparungen (12) in der inneren Basis der Verlängerungsbuchse (11) umfasst, die entsprechende, einander diametral gegenüberliegende Vorsprünge (10) an dem zweiten Endabschnitt des Schaftes (9) aufnehmen, um so Drehbewegung des Schaftes (9) in Bezug auf die Verlängerungsbuchse (11) zu verhindern;
ein O-Ring (18) einen Umfangsflügel aufweist, der zwischen der Verlängerungsbuchse (11) und dem Prothesenaufnahme-Körper (15) angeordnet ist; und
eine Dämpfungsdichtung (8) in einem untersten Abschnitt (7) der axialen Öffnung (5, 6, 7) angeordnet ist, wobei das Ende des zweiten Endabschnitts des Schaftes an der Dämpfungsdichtung (8) anliegt.

2. Zahn-Implantat nach Anspruch 1, **dadurch gekennzeichnet, dass** die Festklemmeinrichtung zum Festklemmen des Implantats nach dem unmittelbaren Einführen ein im Allgemeinen hohles Teil (19) mit einer Kegelstumpfform ist, das auf dem Prothesenaufnahme-Körper (15) positioniert werden und daran mittels einer Schraube befestigt werden kann.

3. Zahn-Implantat nach Anspruch 2, **dadurch gekennzeichnet, dass** das Teil (19), das auf dem Prothesenaufnahme-Körper (15) positioniert wird, wenigstens ein radiales Gewinde an seinem oberen Teil zum Befestigen entsprechender Träger (20) zur Verbindung des Implantats mit einem anderen Implantat aufweist.

4. Zahn-Implantat nach Anspruch 1, **dadurch gekennzeichnet, dass** der erste Endabschnitt des Schaftes (9) in den Prothesenaufnahme-Körper (15) eingeschraubt werden kann.

5. Zahn-Implantat nach Anspruch 1, **dadurch gekennzeichnet, dass** die Verlängerungsbuchse (11) einen äußeren Gewindeabschnitt (13) aufweist, der in einen ersten Abschnitt (5) der axialen Öffnung mit einem passenden Gewinde geschraubt werden kann.

6. Zahn-Implantat nach Anspruch 1, **dadurch gekennzeichnet, dass** es eine flache ringförmige Dichtung (14) zwischen dem Implantat-Körper (2) und der Verlängerungsbuchse (11) umfasst.

## Revendications

1. Implant dentaire comprenant :
un corps d'implant (2) ayant une forme généralement cylindrique, un rétrécissement d'extrémité (4) et un filetage externe pour fixer le corps d'implant (2) à un maxillaire,
un corps de réception de prothèse (15) auquel une prothèse est fixée au moyen d'une vis,
un axe (9) ayant une première partie d'extrémité et une seconde partie d'extrémité, la première partie d'extrémité étant fixée au corps de réception de prothèse (15),
une douille à expansion (11) qui est fixée à l'intérieur d'une ouverture axiale (5, 6, 7) du corps d'implant (2) ayant une base extérieure à proximité du corps de réception de prothèse et une base intérieure placée dans ledit creux axial (5, 6, 7), l'axe (9) s'étendant axialement à travers une ouverture centrale dans ladite douille à expansion (11),
des moyens de fixation pour fixer l'axe (9) et la douille à expansion (11) entre eux, et
des moyens d'emboutissage pour emboutir l'implant après son implantation afin de permettre le positionnement d'une prothèse dentaire d'un patient,
**caractérisé en ce que**
les moyens de fixation comprennent une paire de creux diamétralement opposés (12) dans la base intérieure de la douille à expansion (11), pour recevoir des saillies diamétralement opposées respectives (10) sur la seconde partie d'extrémité de l'axe (9) afin d'empêcher les mouvements de rotation de l'axe (9) par rapport à la douille à expansion (11) ;
un joint torique (18) ayant une aile périmétrique, située entre ladite douille à expansion (11) et ledit corps de réception de prothèse (15) ; et
un joint d'amortissement (8) situé dans une partie la plus inférieure (7) de l'ouverture axiale (5, 6, 7), moyennant quoi l'extrémité de ladite seconde partie d'extrémité de l'axe vient en butée contre ledit joint d'amortissement (8) .

2. Implant dentaire selon la revendication 1, **caractérisé en ce que** les moyens d'emboutissage pour emboutir l'implant après insertion immédiate, sont une pièce généralement creuse (19) ayant une forme tronconique, qui peut être positionnée sur le corps de réception de prothèse (15), et fixée à celui-ci au moyen d'une vis.

3. Implant dentaire selon la revendication 2, **caractérisé en ce que** la pièce (19) positionnée sur le corps de réception de prothèse (15), présente au moins un filetage radial sur sa partie supérieure pour fixer des travées respectives (20) afin de lier l'implant à un autre implant.

4. Implant dentaire selon la revendication 1, **caractérisé en ce que** la première partie d'extrémité de l'axe (9) peut être vissée dans le corps de réception de prothèse (15).

5. Implant dentaire selon la revendication 1, **caractérisé en ce que** la douille à expansion (11) présente une section extérieure filetée (13) adaptée pour être vissée dans une première section (5) de l'ouverture axiale avec un filetage correspondant.

6. Implant dentaire selon la revendication 1, **caractérisé en ce qu'**il comprend un joint annulaire plat (14) entre le corps d'implant (2) et la douille à expansion (11).
